# EUROPEAN PATENT APPLICATION

(11) **EP 1 113 642 A2**
(43) Date of publication of application: **04.07.2001**
(21) Application number: 00311131.7
(22) Date of filing: 13.12.2000
(51) Int. Cl.: H04L 29/06

(54) **Enhanced video programming system and method using a local host for network communication**

(30) Priority: 16.12.1999 US 461808
(71) Applicant: ACTV, INC., New York, NY 10020 (US)
(72) Inventor: Ullman, Craig D., Brooklyn, New York 11201 (US); Abato, Michael R., White Plains, New York 10605 (US); Harrington, Jeffrey M., Brooklyn, New York 11215 (US); Duda, Carl R., Santa Barbara, California 93103 (US)
(74) Representative: Needle, Jacqueline

(57) **Abstract**

A local host is used to facilitate network communication between a user machine (202) and a remote server (224) by way of a network (222) such as the Internet. A web browser (204) is included in the user machine (202) and is provided with hidden frames or layers in which pages and/or applets are stored. The hidden frames or layers also include a plug-in (212) programmed to function as a web server at the user machine. The plug-in (212) issues a command which causes the web browser (204) to establish a connection with the remote server (224). This initiates the applet (208) and also causes the plug-in (212) to open a TCP/IP socket (220) to open and maintain communication between the user machine (202) and the remote server (224). The applet (208) may then communicate with the remote server (224) by way of the plug-in (212).

## Description

The present invention relates to a method and apparatus for network communication by distributing network addresses to user machines.

Computers have the capability to provide massive amounts of educational and entertainment information by way of the Internet. Currently, on-line systems offer a variety of different services to users, including news feeds, electronic databases (either searchable by user directly on the on-line system, or downloadable to the user's own computer), private message services, electronic newsletters, real time games for play by several users at the same time, and job placement services, to name a few. However, currently most on-line communications occur merely through text. This is in contrast to the audio/visual presentation of the alternative electronic medium, television. However, it is expected that as multi-media's incessant growth continues, audio/visual programs will proliferate and text will become less and less dominant in the on-line environment.

Even though these programs will be introduced, the Internet will remain essentially user unfriendly due to its very massiveness, organization, and randomness. Simply stated, there is no order or direction in the Internet. Specific pieces of information can be hard to find, and it is even harder to put that piece of information into a meaningful context.

Television, on the other hand, has been criticized for being a passive medium. Whilst interactive television systems have increased the level of user interaction, and thus, provided greater learning and entertainment opportunities, vast information resources such as databases are inaccessible from such a medium.

The present invention seeks to close the gap between video programming and the vast information resources of the Internet.

According to a first aspect of the present invention, there is provided a method for providing a machine with network communication with a server, comprising:
receiving a request for a network connection;
generating a reference to a local connection in response to the request;
detecting communication at the local connection; and
establishing a connection with the local connection in response to the detecting and for facilitating network communication with the machine.

In embodiments, a local web server function is provided at the local connection.

Preferably, the receiving step comprises receiving networked content, and/or a request for a web page from a web browser, and/or a request from an applet.

The present invention also extends to apparatus for providing a machine with network communication with a server, comprising:
receiving means for receiving a request for a network connection;
generating means for generating a reference to a local connection in response to the request; and
detecting means for detecting communication at the local connection; and
connection means for establishing a connection with the local connection in response to the detecting and for facilitating network communication with the machine.

In embodiments, the receiving means may be arranged to receive networked content, and/or a request for a web page from a web browser, and/or a request from an applet.

In an embodiment, the apparatus further comprises detecting means for detecting communication at the local connection, which detecting means may be arranged to receive information for use in opening a socket with the local connection.

According to a further aspect of the invention, there is provided a method for distributing network addresses to user machines for use in obtaining content associated with the addresses, comprising:
receiving a plurality of network addresses identifying network locations of particular content;
receiving a time value of a time parameter associated with each of the network addresses; and
transmitting each of the network addresses to a user based upon each of the corresponding time values.

The present invention also extends to apparatus for distributing network addresses to user machines for use in obtaining content associated with the addresses, comprising:
receiving means for receiving a plurality of network addresses identifying network locations of particular content;
means for receiving a time value of a time parameter associated with each of the network addresses; and
transmission means for transmitting each of the network addresses to the user machines based upon each of the corresponding time values.

According to a still further aspect of the present invention, there is provided a method for distributing dynamic network addresses to user machines for use in obtaining content associated with the addresses, comprising:
receiving a network address containing a variable, the network address identifying varying network locations of particular content based upon the variable;
receiving an associated description for the network address;
resolving the variable in the network address based upon information related to an intended recipient of the network address; and
transmitting the network address along with the associated description to a user machine corresponding with the intended recipient.

The present invention also extends to apparatus for distributing dynamic network addresses to user machines for use in obtaining content associated with the address, comprising:
receiving means for receiving a network address containing a variable, the network address identifying varying network locations of particular content based upon the variable, and an associated description for the network address;
resolution means for resolving the variable in the network address based upon information related to an intended recipient of the network address; and
transmission means for transmitting the network address along with the associated description to a user machine corresponding with the intended recipient.

Embodiments of the present invention will hereinafter be described, by way of example, with reference to the accompanying drawings, in which;
Figure 1 is a diagram showing the receipt and decoding of video signals at a subscriber location using a method of the invention;
Figure 2 is a diagram showing an alternative embodiment to achieve the integration of Internet information with video content;
Figure 3 is a flow diagram of the basic software of the invention;
Figure 4 is a diagram showing an embodiment in which URLs are directly transmitted to a user;
Figure 5 shows an embodiment of a system comprising a digital cable box;
Figure 6 shows an embodiment of a system including a digital T.V.;
Figure 7 shows an example of a user interface;
Figure 8 shows an example of a display providing a user interface;
Figure 9 is a diagram showing an embodiment of a system having distributed communication servers;
Figure 10 shows an example of a logical structure for a local host;
Figure 11 is a flow chart of a method for implementing a local host of network communication;
Figure 12 illustrates a user interface displaying a playlist to an author of the playlist content;
Figure 13 shows a user interface which permits an author to edit the content of a playlist;
Figure 14 illustrates a user interface displaying playlist items pushed to a user;
Figure 15 is a diagram of a data structure for playlist entities;
Figure 16 is a flow chart of a method for implementing a playlist; and
Figure 17 is a flow chart of a method for processing dynamic URLs.

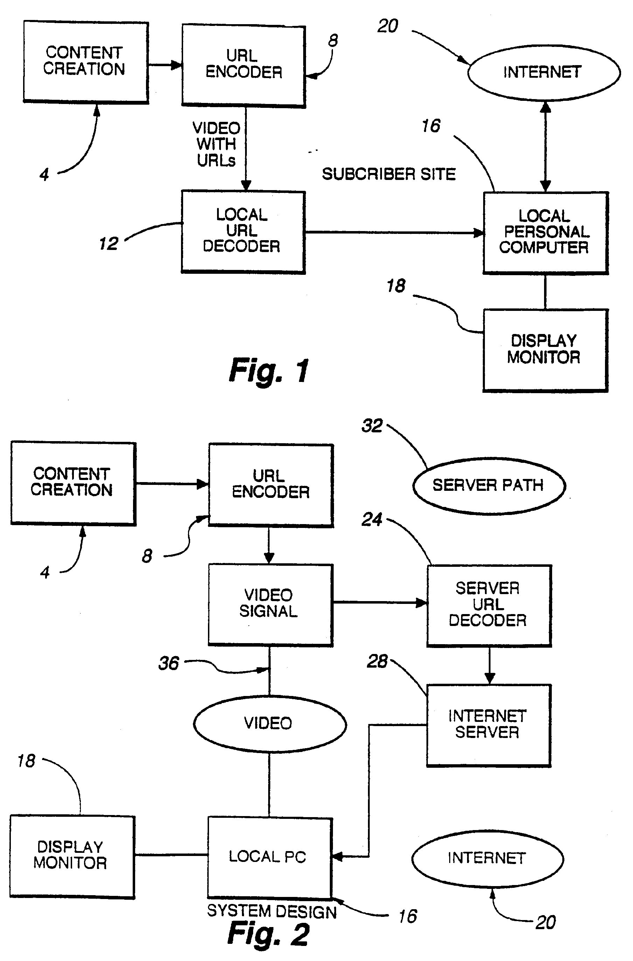

Figure 1 illustrates an embodiment of a computer based system for receiving a video program along with embedded uniform resource locators (URLs) which direct a user's computer 16 to address locations, or web sites, on the Internet 20 to retrieve related web pages. The web pages correspond to the video presentation. The particular video programming can be delivered in analog, digital or digitally compressed formats (e.g. MPEG2) via any transmission means, including satellite, cable, wire, television broadcast or sent via the web.

The video programming is preferably created at a centralized location, for example, as content creation 4 indicated in Figure 1, for distribution to subscribers. Program creation may be accomplished by any appropriate means. After a video program is created, uniform resource locators (URLs) are embedded. In one embodiment, the URLs are embedded into the vertical blanking interval of the video programming by a URL encoder 8, as shown in Figure 1. In this embodiment, the URLs are encoded onto eight fields of line 21 of the VBI. Line 21 is the line associated with close captioning, among other things. However, the URLs may additionally and/or alternatively be embedded in other fields of the VBI, in the horizontal portion of the video, as part of the audio channel, in any subcarrier to the video, or if the video is digital, in one of the data fields.

Although Figure 1 shows the video with the URLs broadcast over the same transmission line, the URLs may be sent down independently of the video program on a data channel. In this embodiment, the URLs may be forwarded to the remote sites either prior to initiation or during the program. Preferably, the URLs have associated time stamps which indicate to the subscriber stations when, during the video program, to display the particular web pages addressed by the URLs. Alternatively, the user can select when to call the particular web pages for display with the video program.

The particular information in line 21 is not part of the visual part of the program, and thus, is not perceptible to the human eye, thereby making it ideal to send data information to the users. Whilst the bandwidth capacity of line 21 is limited, as a system as described transmits only the URLs, and not full web pages, there is more than enough capacity. Furthermore, no additional hardware is necessary at the computer 16 to receive the video and retrieve the web pages.

Once the video program is created, it may be transmitted to user sites over any transmission means, including broadcast, cable, satellite, or Internet, and may reside on video servers. Furthermore, the video program, with or without embedded URLs, may be encoded onto storage means such as a video tape, for example of VHS or Beta format, or an optical disc such as CD or DVD, or any other medium.

Preferably, each receiver station comprises any Intel x86 machine (preferably a 486 processor, pentium processor, etc), an Apple Computer, UNIX or any other type of standard computer workstation. The local computer 16 is preferably connected to either a cable and/or broadcast television or to a local VCR or other video source. At each subscriber site, the local personal computer 16 preferably receives the cable transmission by cable connection on the back of the personal computer 16. The video/audio program may be processed for display on the computer screen using a PC card capable of displaying video signals on a computer monitor in an appropriate TV format such as PAL or NTSC. One example of a PC card is a WinTV card. In addition to the cable connection, there is the Internet 20 connection created concurrently with the cable connection.

The Internet 20 connection may be via high-speed line, RF, conventional modem or by way of two-way cable carrying the video programming. The local PC 16 has Internet access via, for example, an ASCII software mechanism. In an embodiment, at each subscriber site, an associated local URL decoder 12 extracts the URLs, preferably embedded in the vertical blanking interval, with the use of a suitable VBI decoder device. The URL decoder 12 may be either a stand-alone unit or a card which is implemented into the personal computer 16.

In the embodiment shown in Figure 2, the uniform resource locators (URLs) are encoded into the video as described above. Again, the URLs are preferably encoded onto eight fields of line 21 of the VBI, but may also be sent independently of the video. In this embodiment, a URL decoder 24 is located at the server site rather than at the subscriber location. When the decoder 24 receives the video program signal, it strips out the URL codes on line 21 of the VBI and delivers these codes independently to an Internet server 28. The URL code is then subsequently delivered over the Internet 20 to the user PC 16. Simultaneously, the video is broadcast over conventional broadcast or cable transmission means 36 to the user's personal computer 16.

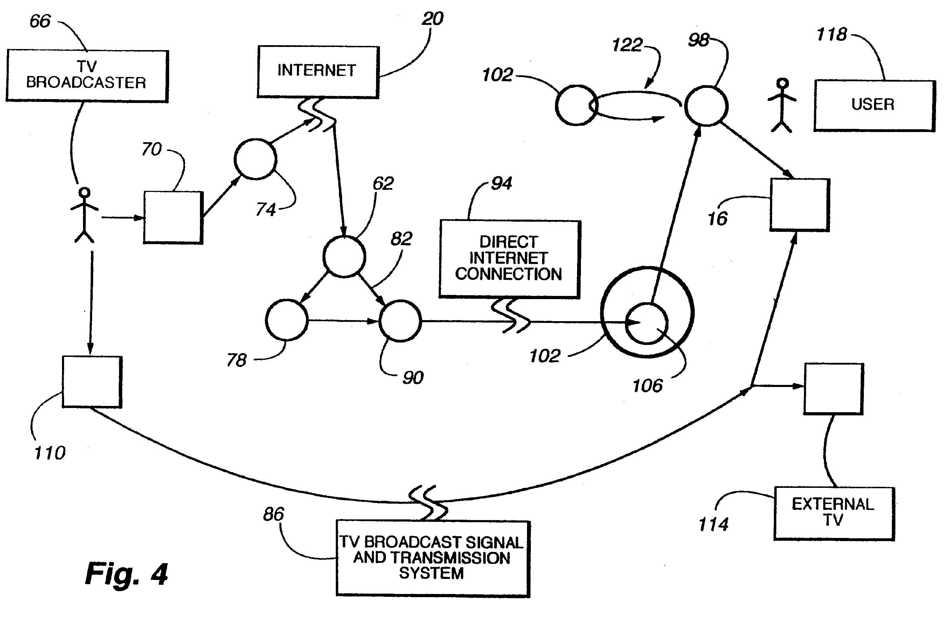

The alternative shown in Figure 4, does not use the VBI. In this embodiment, the system runs an online service over the Internet 20. This service is in the form of an Internet web site 62 which provides a user-interface to a database 78 and to one or more associated data servers 90. The service provides member accounts to TV broadcasters 66 who sign up to use the illustrated system in conjunction with their broadcasts. Each member broadcaster will enter the service at their computer 70 through web browser software 74 using their member account by entering various identification and password information. Once within their account, the member will be provided with a graphical user interface for pre-scheduling URLs for transmission to users 118 over a direct Internet connection 94 at particular times of day. The same user interface, or a variation of it, can be used by broadcasters for live transmission 82 of URLs to users at the same time as a broadcast 86.

One example of this interface might be a scheduling calendar (daily, weekly, monthly, yearly) in which the broadcaster 66 may allocate time periods which coincide with their broadcasts 86, and during which they will send out URLs to their users to link to web pages. For each time period (for example, a particular hour long period during the day) determined by the broadcaster 66 to be a broadcast period (a period during which they want to transmit URLs that correspond to a television show being broadcast from their TV broadcast facility 110 to the external TV 114 of the user 118 at that time), the broadcaster 66 may then enter a series of URLs into an associated file ("Link File") for transmission over the Internet 20 at that time. This Link File may have a user interface such as a spreadsheet, table, or list, or it may be simply a tab-delimited or paragraph-delimited text-file. As an example, each of the records in the Link File consists of a data structure which may contain information such as:

(<timecode>,<URL>,<label or title>, <additional information>,<additional information>,...)

The above data structure is just one example. The records in the Link File preferably specify the time, Internet address (i.e. URL), label (such as an associated name), and some optional additional information, for each web page the broadcaster 66 desires to launch during a show.

When a broadcaster 66 modifies their calendar and/or the Link File associated with any given time period(s) in their calendar, this information is saved into the database 78 which is attached to the site 62. Each broadcaster 66 may maintain multiple calendars in the database 78 if they broadcast in different time zones, for example.

The database 78 provides the Link File records for upcoming time periods to a server 90, which may be one server or a distributed network of server programs on multiple computers across the network, to be utilized for scaling to large national or global audiences. The server 90 provides the Link File records, including the URLs, to the user's personal computer 16, which is connected via a network. Examples of possible networks include the public Internet 94, a direct private network, or even a wireless network.

One feature of the embodiment illustrated in Figure 4 is that one or more broadcasters 66 may utilize the same schedule in the database 78 for their own broadcasts 86 or during the same broadcast. For example, a network broadcaster may develop a master schedule and various affiliate broadcasters may subscribe to that schedule or copy it (in the database) and add or delete specific URLs in the schedule for their local audiences or unique programming. This scheme enables affiliates to insert URLs for local advertisers or local subjects into a sequence of more general URLs provided by their network broadcaster 66. In other words, the affiliate can add links that ride on the network feed and then redistribute it to their local audiences.

The system of Figure 4 also enables personalization in the form of unique series of URLs specific to each user's unique profile, which are directly sent over the Internet 20 to each user's specific client software 106. This can be achieved from the broadcaster 66 to each individual user 118, or to particular collections of users. To accomplish personalization, the service may send a different stream of URLs to each user's client software program 106. The stream of URLs sent depends upon a user profile stored in the database 78 or the client software program 106, a user profile which is built on demand or over time for each user 118 based on criteria such as the location of the user, choices the user makes while using a client software program 106, choices the broadcaster 66 makes during a broadcast 86, or automatic choices made by an algorithm (such as a filter) residing on the service 62. Personalization enables each user to receive URLs which are uniquely relevant to their interests, demographics, history, or behaviour in the system.

Once the URLs have reached the personal computer 16, the operation of all of the systems shown in Figures 1, 2 and 4 is similar.

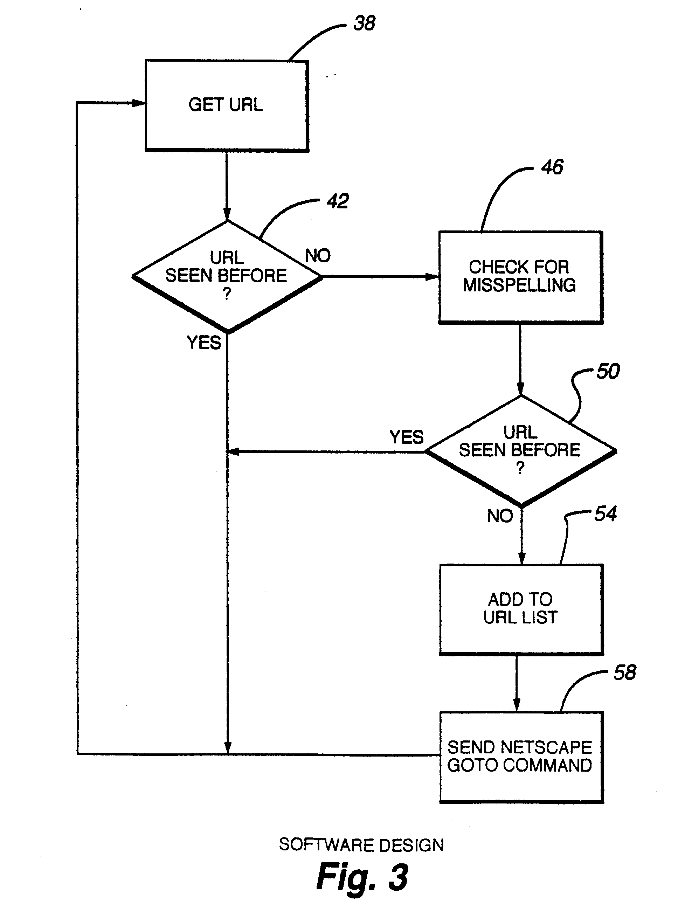

In one embodiment, a JAVA enabled browser 98 as well as specialized software 106 are installed on the computer 16. The JAVA enabled browser 98 allows the computer 16 to retrieve the web pages 102 and is presently the preferred software, as it is platform independent, and thus, enables efficient and flexible transfer of programs, images, etc., over the Internet 20. The specialized interface software 106 (hereinafter, "client software") acts as an interface between the video programming and the Internet functions. The client software 106 retrieves URLs from the video program (embodiment of Figure 1) or directly from the Internet connection (embodiments of Figures 2 and 4), interprets these URLs and directs the JAVA enabled browser 98 to retrieve the particular relevant web pages 102. The client software 106 also synchronizes web pages to the video content for display on the user's computer 16, as shown in Figures 3 and 4 and explained in more detail below.

As explained above, the URLs may be encoded and embedded into the video signal by inserting them into the vertical blanking interval (VBI).

Alternatively, the URLs may be entered by member TV broadcasters 66 along with specified times for transmitting the URLs to the user. At the appropriate times, the URLs are sent directly over the Internet to the user's PC 16 via the client software 106 over a direct point-to-point or multicasting connection.

The system may have the capability to detect identical URLs sent directly after one another and to cause the browser not to fetch URLs in these particular cases. As shown in Figure 3, once the URL code is received at the computer, the client software 106 first interprets the URL and determines in step 42 whether the particular URL has been received previously. If it has already been received, the next received URL is interpreted for determination of prior receipt. If the particular URL has not been detected before, the software checks for misspelling in step 46 and any other errors, and if errors exist, corrects these particular errors. Once again, it is determined whether the URL has been previously detected. If it has, the next URL is accessed in step 38. If the URL has not been detected, the specific URL is added to the URL list in step 54. The specific URL is then sent to the web browser, preferably a JAVA enabled browser 98. Upon receipt of the URL, the browser 98, in step 58, will access the web site address 122 (Figure 4) indicated by the URL and retrieve the cited web page(s) 102 via the Internet.

Viewers can view the integrated presentation in the following manner. As mentioned above, the video signal is processed and displayed on a video window on the PC screen using a WinTV card, for example. The corresponding audio is forwarded to the audio card and sent to the PC speakers.

The retrieved web pages 102, referenced by the URL, are optionally time stamped to be displayed on the computer screen when predetermined related video content is displayed in the video window, thus enhancing the video presentation by providing in-depth information related to the video content thereto. Another section on the screen is also preferably used to represent an operational control panel. This control panel provides a list of the URLs which have been broadcast and correspondingly received by the computer 16. This control panel is updated to add a URL code each time a new URL code is received by the PC 16. This list gives the subscriber the flexibility to go back and retrieve particularly informative or interesting web pages that have already been displayed earlier in the program, or alternatively, to print them out for future reference. Furthermore, the list may include URLs referring to web pages not displayed with the broadcast program, but which provide further information on a certain topic of interest to the viewer.

In an example, a viewer may begin watching a musical video featuring a band. As the video is received by the PC 16, URLs are either being received with the video signal or are being received directly via the Internet 20 or another data channel, and are interpreted by the client software 106. Upon direction and command, the JAVA enabled browser 98 retrieves particular web pages 102 from Internet 20 web sites identified in the URLs. These web pages 102 are then displayed on the video screen at particular times. So, for example, whilst the viewer is watching the music video, biographical information on the band may also be displayed adjacent to the video window. Web pages 102 may also include an upcoming concert schedule, and/or audio clips of the band's music may be downloaded from the Internet 20.

As another example, a user may be watching a program relating to financial news. Whilst the narrator is shown discussing high tech stocks, web pages corresponding to detailed financial performance information on high tech stocks, environment and characteristics may be displayed with the video on the computer screen. If the personalization features are included, web pages associated with a particular user's stock may be fetched and displayed on the computer screen with the video program. When the program narrator switches to a discussion on the weekly performance of the Dow Jones, web pages presenting related financial performance information may be simultaneously displayed.

A user may view the interactive program using a television set 114 or other display monitor in conjunction with the display screen of the personal computer 16. In this case, the relevant web pages are shown on the personal computer 16 whilst the video program is displayed on the television monitor 114. In this alternative, a cable set top box receives the television program from the multi-channel cable. The personal computer 16 also receives the video program from the multi-channel cable and extracts the URLs, embedded in the vertical blanking interval of the video signal or directly transmitted 94 over the Internet 20. The client software 106 extracts the URLs and retrieves the particular web pages as described above. The web pages are then synchronized with the particular video frames and presented to the user. It is understood that a hyperlink may exist on the web site that will allow the user to automatically load the client software and call up the specific television channel referenced in the web site. For example, someone browsing the Internet 20 may come upon a major television network's web site. It is possible then to scroll to an interesting story and then to click on an hyperlink to turn on the software which tunes the TV window to the network.

Instead of receiving the video program from a transmission means, the video program may be addressed directly from the user site if the video program, with or without embedded URLs, has been stored on appropriate means. The storage means may be a videotape in any format, such as VHS or Beta, or an optical disc in any format, such as DVD or CD-ROM. In this case, the user PC 16 and/or television 114 are connected to a video tape player, a disc drive, or other appropriate device.

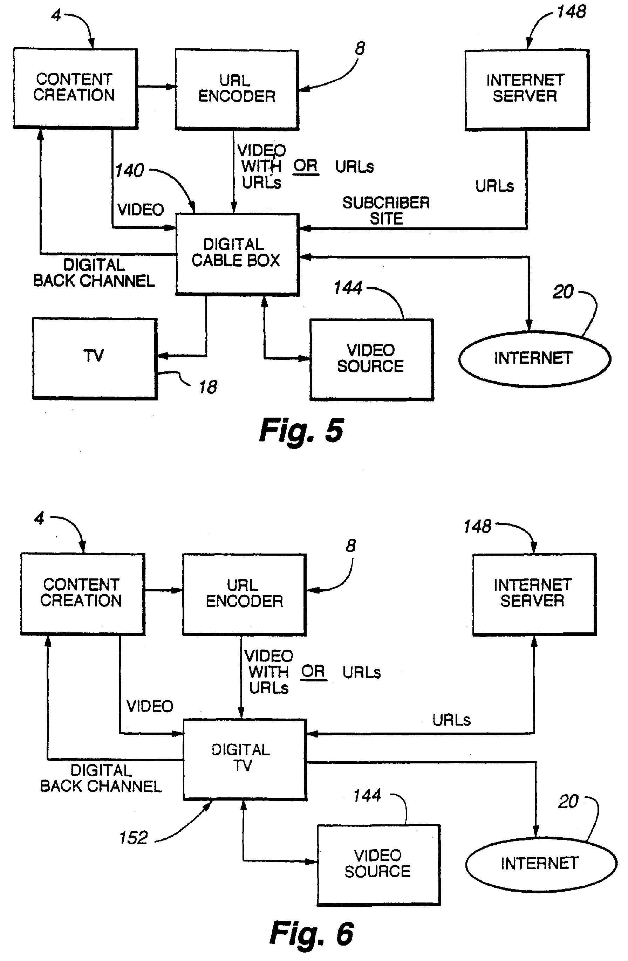

Figures 5 and 6 show two alternative examples of systems which may be employed. As shown in Figure 5, a user may view an interactive program using a television set 18 or other display monitor in conjunction with a digital cable box 140. In this case, the digital cable box 140 performs the functions of the personal computer 16 shown in Figures 1, 2 and 4, and the client software is stored in memory in the digital cable box 140. In one embodiment, the digital cable box 140 includes two tuners, thus allowing both the web page and the video program to be simultaneously viewed on the same screen. If video and web stream, however, are carried on one channel, then only one tuner is necessary.

The client software retrieves URLs from the received video program, directly from the Internet connection 20 or via a separate data channel, interprets these URLs and directs the web enabled browser to retrieve the particular relevant web pages, and synchronizes the retrieved web pages to the video content for display on the television 18. The relevant web pages are preferably shown in one frame of the television 18 while the video program is displayed in another frame. Alternatively, the web page can replace the video program on the display.

In this embodiment, the digital cable set top box 140 receives the television program from the multi-channel cable. The URLs can be encoded into the digital program channel using MPEG1, MPEG2, MPEG4, MPEG7 or any other compression video scheme. Alternatively, the URLs can be transmitted to the digital cable boxes 140 from an Internet server 148. The digital cable box 140 decodes the URLs from the digital video signal or directly transmitted over the Internet 20. The client software decodes the URLs and retrieves the particular web pages as described above. Preferably, the web pages are synchronized with the particular video frames and presented to the user.

As with all the embodiments described above, instead of receiving the video program from a transmission means, the video program may be addressed directly from a local video source 144 if the video program, with or without embedded URLs, is stored on a storage means such as a video tape or optical disc. In this embodiment, the digital cable box 140 is connected to a VCR, disc drive or other appropriate device.

Figure 6 illustrates an embodiment where a digital TV 152 is the remote reception unit and performs the functions of the personal computer, shown in Figures 1, 2 and 4, and the digital cable box 140 shown in Figure 5. A processor means and memory are incorporated in the digital TV 152, and the client software and web browser software are implemented in memory in the digital TV 152. All of the functions described above with reference to the other embodiments are performed in a similar manner by the digital TV 152 embodiment.

Although the digital cable box/TV 140, 18 and digital TV 152, shown in Figures 5 and 6, are incorporated into the embodiment of Figure 1, in substitution for the PC 16, they may also be substituted for the PC 16 shown in Figures 2 and 4.

A user may view the video and web content on one screen (in two windows), or with the video on one display screen and the web content on a separate display monitor. Alternatively, a user may access the video or web content separately. Thus, a user may branch from video to web content and vice versa.

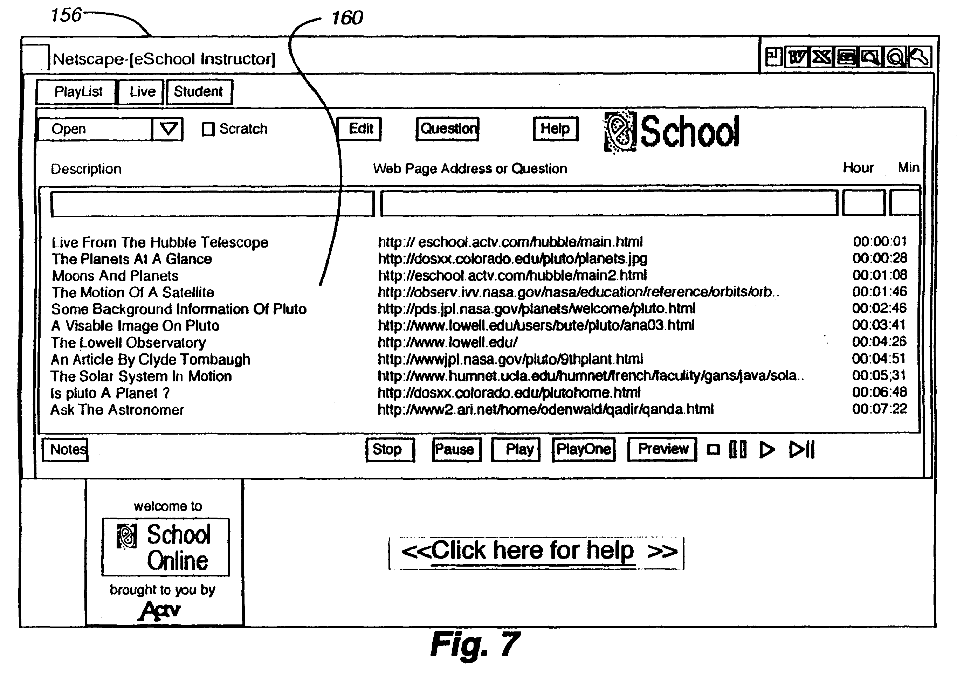

The systems described herein are well-suited to the education environment. Thus, students and teachers may access one or more web servers. Software components including instructor and student user software, authoring software and database assessment software are provided. An instructor may, for example, use content creation software on a personal computer to easily integrate into the curriculum current information published on the web through an interface 156 shown in Figure 7. The instructor creates a playlist (i.e. linkfile) 160, the playlist 160 comprising a list of web pages, text notes and questions. The web sites and questions are set out in a predetermined order and can be assigned times. Preferably, the URLs identifying the web site and time stamps are sent automatically to the desktop of each student in the virtual community, either during a playback of a pre-recorded program or during a live event.

At each of the student workstations, the program is directed by the playlist 160. In other words, the playlist 160 provides the structure for the program. At predetermined times as indicated by the playlist 160, the browser will fetch and display a web page in a frame on the computer screen. Because program events can be set up in this manner at predetermined times, the entire program and playlist can be prerecorded and stored in a web database for later access by students.

It will be appreciated that the students and the instructor may be located anywhere, as long as they are all connected to the web. Because a server controls the program, the instructor output comes from the server and the student workstations are automatically updated by the web server.

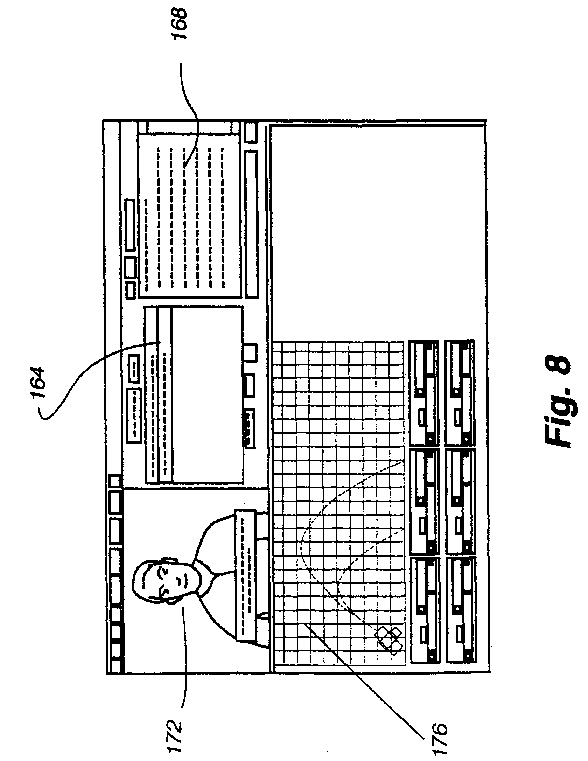

This educational embodiment integrates web content and other media with collaborative groupware functionality to create an interactive environment for students and teachers. The student may receive a traditional video lesson through a frame in his or her web browser, or from a television. Separate frames may be simultaneously provided as shown in Figure 8, which shows the browser displaying: web pages 176 automatically delivered to each student's desktop with information or exercises that complement the video presentation; a chat dialogue frame 168 for conversing with the instructor and/or other students online; and an interactive playlist 164 of web pages and questions comprising the lesson.

In the student interface of Figure 8, each student may perform a virtual experiment, for example, during a physics lesson to learn about gravity. In addition, the students may converse with one another and with the instructor using the chat dialogue frame 168. They may also send web pages to one another and provide answers to questions from the teacher via the chat dialogue frame 168 of the student interface 176. With the chat feature, students may break into subgroups for collaborative learning. Whenever a student in the group sends a message, the message is sent to the Internet server 20 and every other student in the subgroup receives and views the message in their chat dialogue frame 168.

The instructor, however, may retain control over the chat feature. For example, the instructor may terminate the chat feature or web push to terminate unruly on-line conversations or the sending of web pages by students.

The systems described herein are more powerful than conventional distance learning systems as they allow the instructor to freely and conveniently exercise almost any type of testing strategy. The instructor may test students using a combination of the chat dialogue feature and web pages. For example, multiple choice questions and short answer questions can appear in the chat window 168. Essay questions, requiring longer answers, become web pages. As mentioned above, students can perform virtual experiments on-line. Once the instructor's personal computer receives student answers, student scoring may be presented to the instructor in any format including tables, charts, diagrams, bar graphs, etc. The instructor, thus, may analyze the results and has the capability of providing real-time feedback to the students.

Students may also receive individualized feedback via branched interactive audio, video and/or graphics responses. For example, the workstation may branch to a particular audio response, preferably prerecorded in the instructor's own voice, based on the student response to a multiple-choice question. A plurality of potential audio responses may be made available at the student's workstation, for example, by a method as described in US patent No. 5,537,141. Additionally and/or alternatively, personalized video, audio and graphics segments may be delivered and displayed to the student based on a student answer or personal profile, for example, in a manner as described in US patent No. 5,724,091.

Responses to student answers may be more substantive using a memory feature comprising an algorithm which selects an interactive response to the user based not only on the student's current answer selection, but also on the student's previous responses. The algorithm, preferably stored in memory at each student's workstation and under processor control, selects an output interactive response based on student responses. In an example, a student who gets three or more answers in sequence right receives a more difficult question. However, a student who fails to correctly answer one or more of the three questions receives an easier question.

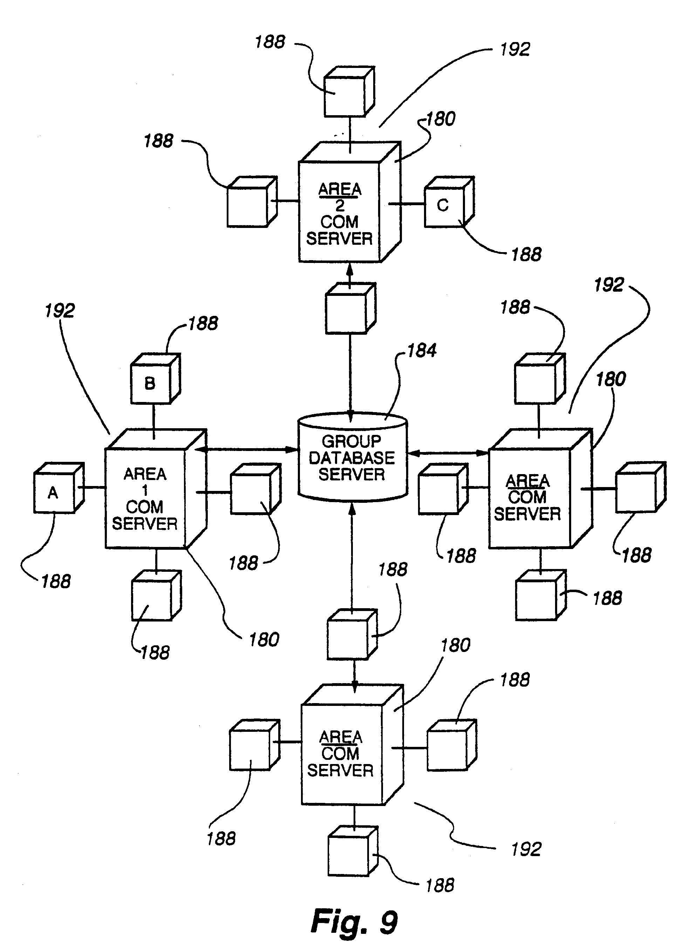

The system illustrated in Figure 9 is capable of servicing large numbers of users, for example, several schools. As shown, communications servers 180 distribute and route message across a LAN, WAN and the Internet. At the heart of the system is a group database server 184, and this is surrounded by several communication servers 180 which each serve an area 192. Each communication server 180 is surrounded by squares representing user stations 188. The communication servers 180 are organized in node relationships with one another.

Each node is responsible for serving an area 192. An area 192 is defined as a virtual location serviced by a single communication server 180 (or "com server"). An area 192 may be a single school, an office, or may consist of several actual physical locations. The defining characteristic of an area 192 is that messages sent from one member of an area 192 to another need not be routed outside of the servicing com server 180.

An area member is analogous to the frequently used term "user". For example, a "user" may be a student in an educational environment.

The distributed communication system shown in Figure 9 permits the dynamic addition of communication servers 180 within a group with little or no administrative tasks as well as the addition of groups within an overall communications network. A communication server group consists of several defined virtual areas 192 (preferably, consisting of no more than 250 members each), each area 192 serviced by a single com server 180. This system allows members of one area 192, or group, to easily communicate with members of another area 192 or group without any configuration changes.

In the past, service of very large numbers of users has required large expensive servers and networks. Furthermore, as the user base increased, performance suffered and the hardware had to be upgraded to service the demand.

The distributed communication system allows the same, relatively inexpensive, machines to serve an ever-increasing user base. This is accomplished by routing messages from one server to another when necessary following substantially the same core pattern as IP routing and DNS lookups. If a message is for a member not belonging to the current area 192 or group, the message is routed through the distributed communication system until its destination, or someone who knows the destination and can deliver the message, is found. The destination may be cached so subsequent messages for that member or group may be more efficiently delivered.

Referring to Figure 9, if a message is posted by member "A" and is intended only for the members of group 1, the message never leaves the area 1 com server. However, if the message is intended for members of area 1 and for members of area 2, the area 1 com server forwards the message to the group database server 184. The message is broadcast to the members of area 1 and tagged in the group database server 184 as belonging to area 2. The message is then routed to area 2 and broadcast to area 2 members. With this technique, any member may potentially send a message to any other member. If the area com server 180 does not recognize the destination, the message is forwarded up the line. Each com server 180 does not need to know about any other server 180. Messages are routed until they delivered. If undeliverable, the original sender is notified.

New areas 192 can be added on the fly. When a new com server 180 is added to the network, it registers itself with the database application. Henceforth, any message destined for the new area 192 may be routed properly without altering the other area servers 180.

This method and system works for global messages or for user to user messages. Furthermore, new groups may also be dynamically added. Once added, each new group database server 184 registers itself with the existing database servers 184. This distribution of load permits nearly unlimited expansion with existing software and hardware. Each server manages a finite number of members, cumulatively serving a growing community.

Users need not be informed as to the particular com server 180 they should connect to. Members are directed to a single URL. The selection of the server for user connection is determined by load balancing software. In this manner, the network may appear to be a global network of servers or simply a local classroom.

The architecture described, which uses database servers as routing gateways, enables the system to serve with minimum administration and configuration and with lower end, cost-effective hardware.

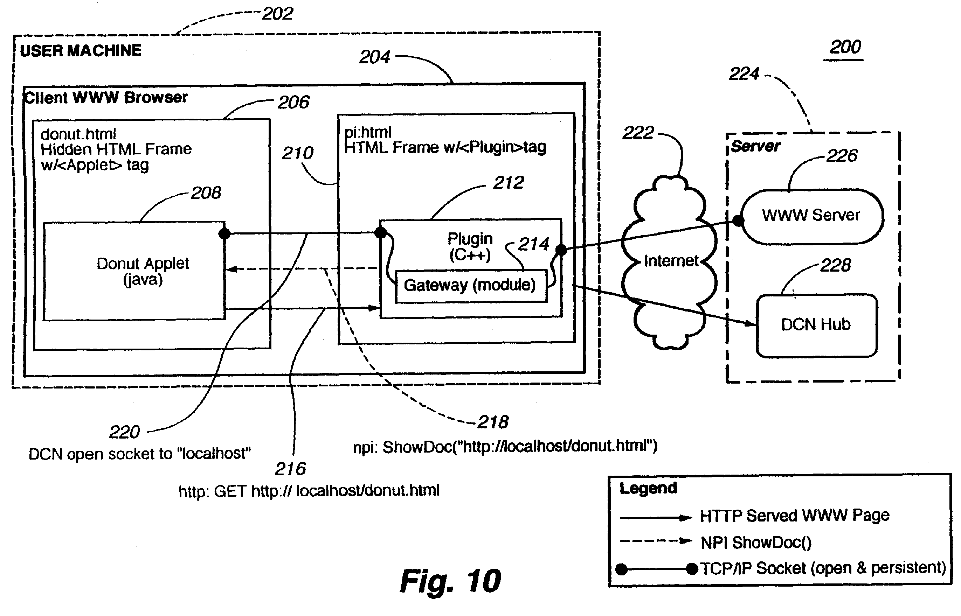

Figure 10 illustrates a system 200 arranged to utilise an entity referred to as a local host for facilitating network communication between a user machine 202 and a server 224 through a network 222. The network 222 may be any suitable network, for example, such as the Internet. A local host connection may provide increased functionality in network communication by overcoming certain limitations which exist, for example, within applets in the JAVA programming language. Applets are small applications, typically written in the JAVA programming language. In order to meet required security criteria, the JAVA programming language does not permit certain functions to be undertaken by use of applets. For example, applets typically cannot read to, or write from, a hard disk on a user's machine. The security criteria help to ensure that a user does not unknowingly download an applet as part of a web page, for example, where the applet has the capability to adversely affect the user's system processing or stored data. However, there are situations where it may be advantageous to eliminate or reduce the security restrictions applied to applets in a particular controlled environment. In those situations, the local host may enable the functions of applets to be increased.

In system 200 illustrated, the user machine 202 has a local host or connection with the server 224 through Internet 222. The user machine 202 includes a web browser 204, which may be implemented by any type of web browser for Internet communication. The web browser 204 includes a HyperText Markup Language (HTML) page, referred to as a donut.html page, within a hidden HTML frame 206. Instead of frames, it may use layers such as those used with dynamic HTML (DHTML) pages. The page 206 may be stored within a hidden frame or within a layer in memory on the user machine 202. Hidden frame or layer 206 includes a donut applet 208 having functions for communicating with the server 224, and the applet 208 may include, for example, applications requiring communication with a server.

The term "donut" is used only as a label and, in this example, refers to a particular file storing user-profile information for use in transmitting content to a user. The user-profile information may include a wide variety of information relating to a user such as, for example, one or more of the following: age of the user, sex of the user, marital status of the user, prior activities of the user, income range of the user, number of people in the user's household, occupation of the user, industry of the user, length of residence, interests of the user, and other information, such as demographic and activity-based information, about the user.

Use of a "donut" storing user profile information is described in US application No. 09/409305 filed 29th September 1999.

The web browser 204 also includes a pi.html page within an HTML frame or layer 210 stored in memory of the user machine 202. The pi.htlm page in frame or layer 210 is loaded from the server 244. The frame or layer 210 also includes a plug-in 212 arranged to implement a gateway module 214 for communication between the applet 208 and the Internet 222. A "plug-in" is an auxiliary program which works with a software package or other program to enhance its capability. The plug-in 212 implements the gateway module 214 in order to provide for a local host that effectively functions as a web server. In particular, upon being loaded, pi.htlm page 210 initiates the plug-in 212 and the gateway module 214, in the C++ programming language, for example, to open a connection 220 with the applet 208.

Plug-in 212 communicates through the Internet 222 with the server 224. The server 224 may include a web server 226, which may be any web server able to provide for Internet and/or other network communication. The server 224 may also include a distributed community network (DCN) hub 228, for example, as described in US patent application No. 09/396693 filed on 15th September 1999.

In operation, the plug-in 212 provides a ShowDoc command 218; for example, npi: ShowDoc(http://localhost/donut.html"). The term "NPI" (or "npi") refers to the "Netscape Plugin Interface" which is an application program interface used by plug-ins in web browsers such as the Netscape Navigator program and the Microsoft Internet Explorer program. The "ShowDoc" command is a command in the NPI and the JAVA programming language instructing a web browser to show in a frame of the web browser the content from the URL provided in the command. Therefore, the ShowDoc command is used to push content to the web browser.

The ShowDoc command 218 initiates an applet tag located in the page 206. Upon receiving the ShowDoc command 218, the web browser 204 responds by sending a GET request 216 in order to establish a connection with the server 224, which in turn initiates the applet 208. The GET request 216 includes a URL for a particular page, for example,
"http:GEThttp://localhost/donut.html." Plug-in 212 receives the GET request 216 and uses it to open a Transmission Control Protocol/Internet Protocol (TCP/IP) socket 220 to plug-in 212, which then functions as a local host using the gateway module 214 to permit open and persistent communication with the server 224. A socket is a known way to provide Internet communication, and it specifies an Internet Protocol address of a station and a port number. The applet 208 subsequently communicates with the server 224 through the module 214, which appears to applet 208 as a web server.

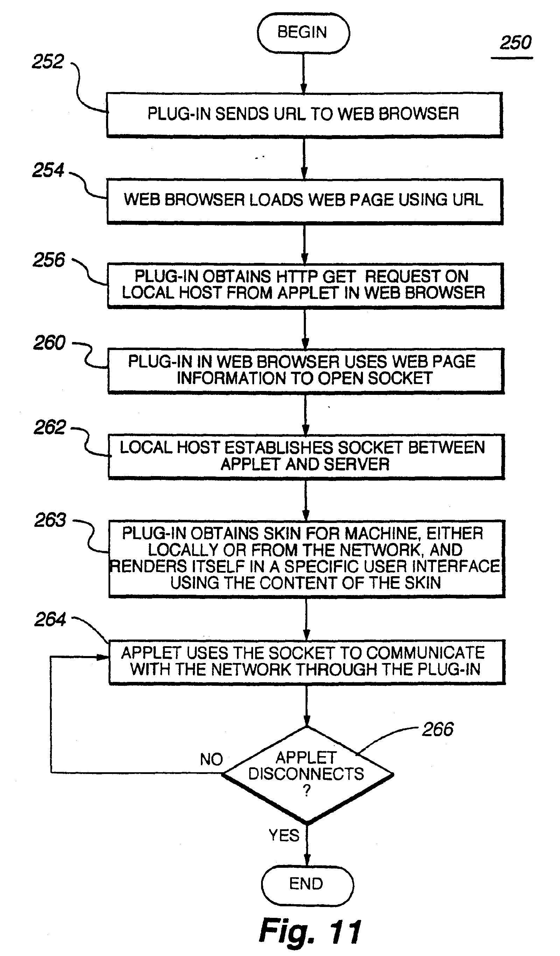

Figure 11 is a flow chart showing a method 250 for implementing a local host within the system 200. In order to implement a local host, the plug-in 212 locally functions as a web server, and the host which the JAVA code in the applet 208 is allowed to access will be the same host as that which originally served the HTML page containing the applet 208. The plug-in 212 requires functionality to respond to only one HTTP request which it generates itself by means of the ShowDoc command 218 for displaying a URL into a hidden frame or layer. That URL refers to the gateway module 214 on a port known only to the plug-in 212.

In the method 250, the plug-in 212 sends a URL to the web browser 204 using the ShowDoc command 218, such as npi:
ShowDoc((http://localhost/donut/html") (step 252). The web browser 204 loads a web page or other networked content using the URL in order to generate the GET request 216 (step 254), and the plug-in 212 receives the GET request 216 from the applet 208 in web browser 204 (step 256). The GET request includes a URL such as "http: GET http://localhost/donut.html" for indicating an address for the local host.

Plug-in 212 in the web browser 204 uses the web page information or other networked content in order to open the TCP/IP socket 220 to a local host including the gateway module 214 in plug-in 210 (step 260). In establishing the local host, the gateway module 214 provides for socket 220 between the applet 208 and the server 224 (step 262). In particular, plug-in 212 acts as a proxy, forwarding requests from the applet 208 to the remote server 224. Plug-in 212 may optionally obtain an entity referred to as a "skin", explained below, to render itself in a specific user interface for the machine 202 (step 263). The applet 208 then uses the socket 220 to communicate with the server 224 through plug-in 212 and remote server 244. Plug-in 212 maintains the socket 220 and detects whether the applet 208 disconnects the connection (step 266). If the connection is disconnected, the plug-in 212 removes the socket 220.

The plug-in 212 preferably has the ability to use multiple skins, which are an integrated set of graphics, colors, and other multimedia content, and their particular arrangement to form a specific, branded user interface. Plug-in 212 and a DCN; identified above, have the ability to distribute and receive an arbitrary object. One such object may be the package of graphics and other content that comprise a skin. Before a program begins, when the user logs on to the network, the system checks to see if the particular skin is resident on the user's machine. If the skin is not resident, the plug-in 212 requests the skin object, and the DCN automatically distributes the skin to the plug-in 212. Once the skin is resident, the plug-in 212 renders itself using those graphics, colors, and other content.

In addition to requesting and distributing a skin when the user logs on, a programmer may also dynamically change a user's skin during the program. The logic for loading the new skin during the program is the same as the logic for loading a skin at the start of a program. This skin change may also be invoked by a playlist request or a donut event based on user-profile information as described in the application identified above.

The following provides one example of the use of a local host. During an event that combines automatically delivered web content through a web browser plug-in with a video stream, a question appears in the user's web browser containing an interactive question. This may be written, for example, in Macromedia Flash, a common web authoring tool. The question reads: Have you brought a new car this year? Yes or No. If the user clicks on "Yes", the JavaScript program in the web page containing the question may execute a post with the format of http://localhost?userclick=Yes. The local host is therefore the "pipe" that connects the web browser to the plug-in. The plug-in receives this information through an open socket and acts on it to send the user another web page with content applicable to persons who have recently bought a new car.

A playlist permits one user, referred to as an author, to push a list of URLs or network addresses to other users. A playlist is a structured collection of URLs that are sent to a user's machine to either be displayed at a specified time ("pushed") or presented in a tree structure to be pulled down later when the user wants to find more detail. The playlist may reference a network address, such as a URL, a description for each URL, a time value, a frameset, a frame or layer, a prefetch time (if appropriate), a pull within a push context, and potentially a variable for a dynamic URL. The playlist permits the author to effectively push various types of content to users, such as advertisements, interactive games, sports scores, narrative content, or any type of multimedia information. The narrative content may be used, for example, to provide textual descriptions accompanying video presentations.

The author enters a URL and an associated description along with a time value. Based upon the time value, the author's machine transmits the URL, along with the description and web page or other networked content, to the user. The frame (or layer) and frameset indicates where to display the web page or other networked content on the user's machine. The prefetch time may be used to assemble a page corresponding to the URL in a hidden frame or layer. The dynamic URL permits the URL to be customised based upon other information such as a user's geographic location, as explained below. In addition to web pages from the Internet, the playlist may use the URL to retrieve web or other content from a variety of sources such as, for example, from the user's hard disk drive or other storage medium. In addition to web pages, the playlist may be used to retrieve other content such as, for example, an audio stream, a video file, or other multimedia information

The pull within the push context provides other ways to retrieve content using the playlist, as illustrated by the following example. During a news program, the television broadcast shows a clip of a news conference. A playlist item, a web page or other networked content designed to appear in a particular frame in a particular frameset, is pushed (automatically delivered) to all the users on-line. In addition, the news organization broadcasting the conference has several other web pages which the user may be interested in as background material. This other networked content is sent as a "pull within a push" playlist item. The additional content does not automatically appear in the user's browser. Instead, the user receives an indication that other networked content can be accessed. If the user requires to access the other content available, the user accesses the content in an appropriate manner, for example, by using a mouse to click on a graphic, or by way of other user inputs. Thus, the pull within the push context permits content to be pushed to a user, and through that content the user may pull additional content to the user machine.

Additionally and/or alternatively to URLs, the playlist may include Uniform Resource Identifiers (URIs). A URI is a compact string of characters for identifying an abstract or physical resource. More specifically, URIs provide a simple and extensible means for identifying a resource, and a URI may be further classified as a locator, a name, or both. The specification of URI syntax and semantics is derived from concepts introduced by the World Wide Web global information initiative. URIs include, for example, URLs and Uniform Resource Names (URNs). A URL is a subset of a URI which identifies resources via a representation of their primary access mechanism, such as their network "location", rather than identifying the resource by name or other attribute of that resource. The term URN refers to a subset of URI which is required to remain globally unique and persistent even when the resource ceases to exist or becomes unavailable.

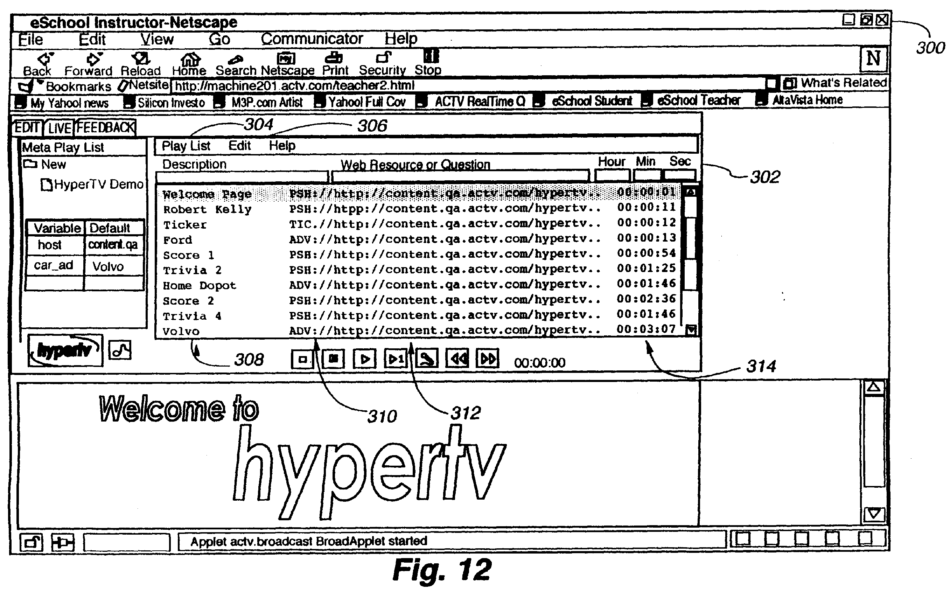

Figure 12 is a diagram of a user interface 300 displaying a playlist to an author of the playlist content. In this example, the playlist content is shown in a section 302 displayed within a screen 300. The content includes, for each URL, a textual description 308, a type of content 310, a URL 312, and a time value 314. The textual description 308 permits the author to provide a potentially more descriptive identifier for the content associated with a particular URL. The type of content 310 identifies for each URL the type of associated content or how it is to be displayed, and examples include push content (PSH), a ticker display (TIC), and an advertisement (ADV). The section 302 includes a playlist menu item 304 for a user to select in order to view playlist section 302 listing the playlist. It also includes an edit item 306 for a user to select in order to create or edit the playlist content.

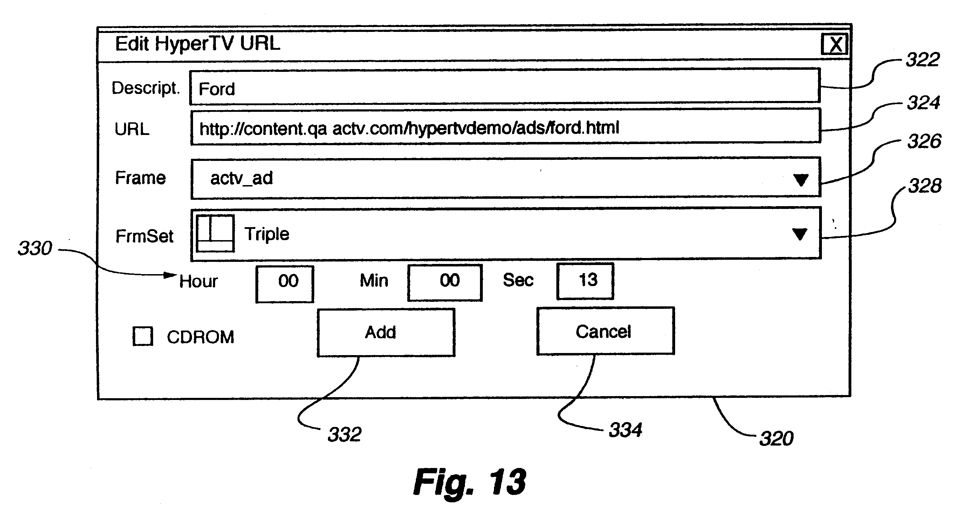

Upon selecting item 306, the author's machine displays user interface 320 shown in Figure 13. The user interface 320 includes a section 322 for the author to enter a textual description for a particular URL. A section 324 permits the author to enter the URL. A section 326 provides a pull-down menu permitting the author to identify a particular frame or layer on the user's machine in which the content associated with the URL in section 324 will be displayed. A section 328 provides a pull-down menu permitting the author to select a frame set identifying how many frames or layers will be displayed on the user's machine. As shown, one option is a triple frame set in which three frames are displayed. Other examples include a single, double, or quadruple frame set for displaying, respectively, one, two or four frames.

A time section 330 permits the author to identify a time value for the author's machine to transmit to a user's machine the URL in section 324, the description in section 322, and optionally an associated web page or other networked content. In this example, the author may enter values for hours, minutes, and seconds. The author's machine uses the entered time value as a timer, and it pushes the associated URL to the user's machine upon time-out of the entered time value. Other time parameters are possible for determining when to push the URL to a user's machine. For example, the URL may be pushed at a specified particular time and day and/or at a predetermined amount of time after the occurrence of a specified event.

In edit section 320, the author may select an add section 332 to add the entered information to the playlist and select a cancel section 334 to cancel the entered information. The author typically selects the sections by use of a cursor-control device to "click on" the section and/or by entering a command using a keyboard. It will be appreciated that any suitable user input interface may be provided.

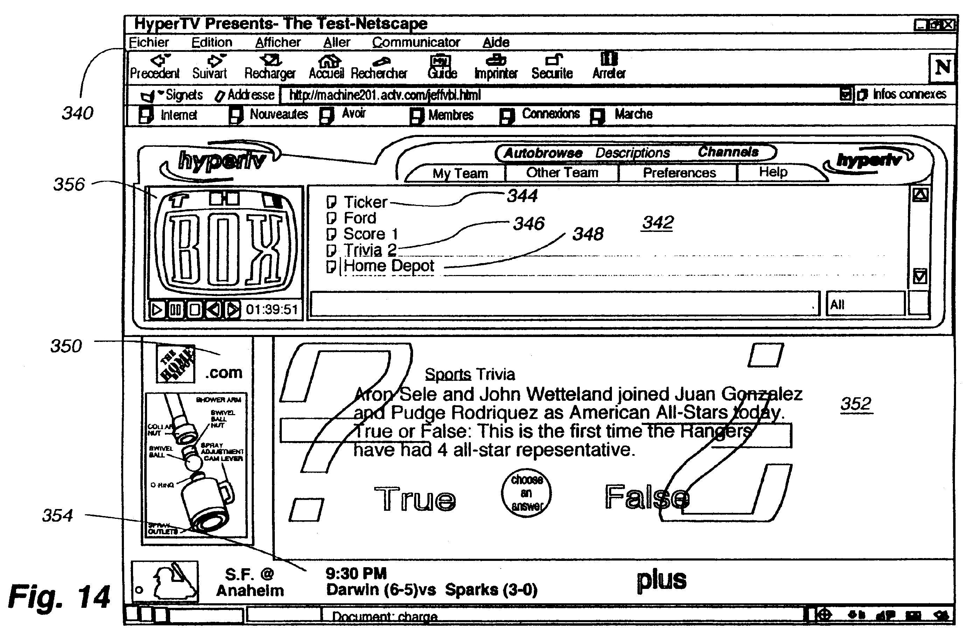

Figure 14 is a diagram of a user interface 340 displaying a playlist of items pushed to a user. User interface 340 includes a section 342 for displaying playlist items pushed to the user. Usually, only the descriptions are displayed to the user, whilst associated URLs, web pages and/or other networked content, may be stored on the user's machine and linked with the descriptions. User interface 340 also includes frames or layers in which to display content associated with the URLs pushed to the user, and these may include, for example, one or more frames 356 for displaying video content, one or more frames 350 for displaying advertisements, one or more frames 352 for displaying games, and one or more frames 354 for displaying a ticker display, for example, of sports scores.

Upon selecting a description among the playlist items in section 342, the user may retrieve and view associated content. The description may thus operate as a hypertext link. For example, by selecting description 344, the ticker display in section 354 may be displayed. By selecting description 346, the game in frame 352 may be displayed. By selecting description 348, the advertisement in frame 350 is displayed. The user may select other descriptions from amongst the playlist items in section 342 in order to view the associated content or web pages or other networked content. The frame or layer in which the content is displayed depends upon the frame or layer information identified by the author in section 326 of edit section 320.

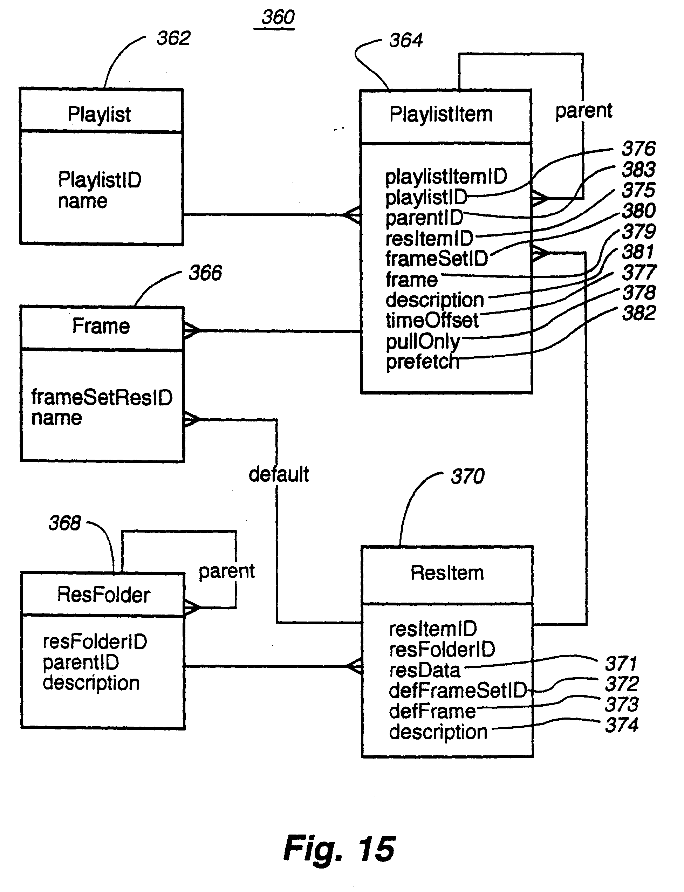

Figure 15 illustrates an example of a data structure 360 for playlist entities. The playlist entity provides a name and identifier to the collection of URLs. Data structure 360 includes multiple entities or other data structure elements for storing the playlist entities and associated data. In this example, these entities include a Playlist entity 362, a Playlistltem entity 364, a frame or layer entity 366, a ResFolder entity 368, and a Resltem entity 370.

The actual URL data is stored in a resData field 371 of Resltem entity 370. ResFolder entity 368 is used by the author of the playlist to organize data in Resltem entity 370 into a folder hierarchy for organizational convenience and typically has no effect on the end user experience. A defFrameSetlD field 372, a defFrame field 373, and a description field 374 are similarly provided as conveniences for the author.

Playlistltem entity 364, also referred to as "item", represents a specified resltem in entity 370. It is identified by a resltemlD field 376 in a playlist identified by playlistlD field 376. The item is to be shown after a time specified by a timeOffset field 377. In particular, the item is pushed to the user's machine at that time unless a pull only feature is set as identified in a pullOnly field 378, in which case the item is a pull within a push context. The item is to be shown in the frame or layer specified by a frame field 379 and a frameSetlD field 380. A description field 381 specifies the description seen by the user in the displayed playlist. Default values for frame field 379, frameSetlD field 380, and description field 381 are derived from the corresponding item in Resltem entity 370. A prefetch field 382 indicates the pre-loading of the URL in a staging area. A staging area for prefetch involves the assembly of a page in a hidden frame for subsequent display of a completely assembled web page. One example of this is described in US patent application No. 09/397298 filed on 15th September 1999.

A parentlD field 383 of Playlistltem entity 364 specifies a parent item in the hierarchy of items. In a flat playlist, parent ID is null. When in a hierarchy, timeOffset field 377 is relative to a time offset for a parent item. The relationship is recursive, making it easy to push a playlist at any time and to reuse URL resources and their relationships in the authoring tool.

Frame entity 366 specifies a specific frame or layer within a frameset into which an item is to be pushed or pulled. It is referred to by both Resltem entity 370 and Playlistltem entity 364. These entities may exist in multiple databases or even by multiple vendors and are manipulated by authoring tools, for example, such as those available in the C++, JAVA, and Tango programming languages. These entities may be exchanged and manually edited in Extensible Markup Language (XML) and transmitted over a distributed community network. An example of a distributed community network is described in US patent application No. 09/396693 filed 15th September 1999.

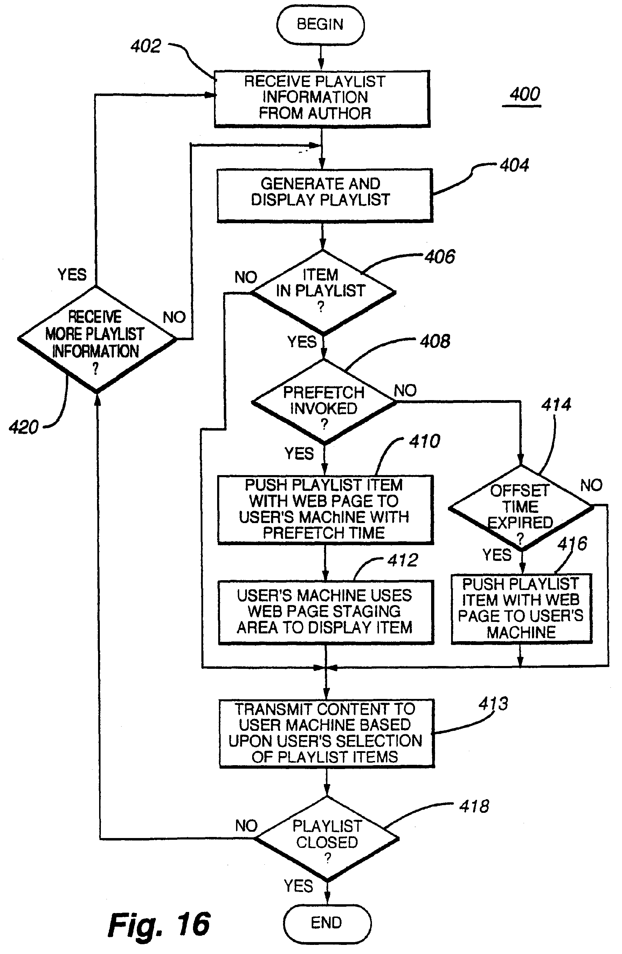

Figure 16 is a flow chart of a method 400 for implementing a playlist. Method 400 may be implemented using software modules for execution by a corresponding machine. In method 400, the system receives playlist information from the author in edit section 320 (step 402). This information may include a URL, a description, a frame or layer identification, and a time value. The system uses the playlist information to generate and display a playlist as shown in section 302 (step 404). The system continually monitors the playlist to determine if it contains an item (step 406). If it contains an item, the system determines if prefetch was invoked (step 408) and, if so, it pushes the playlist item with a web page or other networked content to the user's machine along with a prefetch time (step 410). The user's machine may use a web page staging area to display the playlist item (step 412). That is, the web page may be assembled in a hidden frame or layer and displayed when assembled. If prefetch was not invoked, the system determines if the offset time as entered by the author has expired (step 414). Once the offset time expires, the system pushes the playlist item with a web page or other networked content to the user's machine and displays the item as shown in section 342 (step 416). Particular content is also pushed to the user's machine based upon the user's selection of playlist items (step 413).

The system determines if the author has closed the playlist (step 418). If the playlist remains open, the system determines if the author enters more playlist information in edit section 320. If more playlist information is to be entered, the system returns to step 402 to receive the playlist information and then generate and display a new playlist at step 404. If the user does not enter more playlist information, the system returns to step 406 to process any additional items in the playlist.

A dynamic URLs feature permits a system to dynamically configure a URL, URI, or other content identified based upon resolution of a variable. Thus, the system may customize URL content for particular uses. The dynamic URL is important as it enables content to be localised and enables the transmission of various types of content, for example, related to the playlist. For example, a national television broadcast might include a commercial for a particular vehicle. The advertiser may wish to supplement that advertisement with information local to each viewer. A dynamic URLs feature enables viewers to be sent web pages identifying local dealers.

In one specific example, a user Bob lives in Los Angeles and there is a specific automobile dealer based a few miles away from Bob on Ventura Blvd. The playlist author may have a playlist entry for an automobile advertisement which includes a dynamic URL. The server software may determine which one of many URLs that references all particular dealers in America should be sent to Bob, or Bob's user profile (donut) in his client may parse the dynamic URL, determine the specific web address of the Ventura automobile dealer web page, and push that network address into Bob's browser.

The dynamic URLs may be stored and distributed in a playlist as described above and executed as part of steps 410 and 416. A dynamic URL may be identified by the presence of a variable with particular characters. The dynamic URL may contain the variable brackets "{" and "}" as follows, for example,
PHS://http//content.qa.actv.com/{variable}.

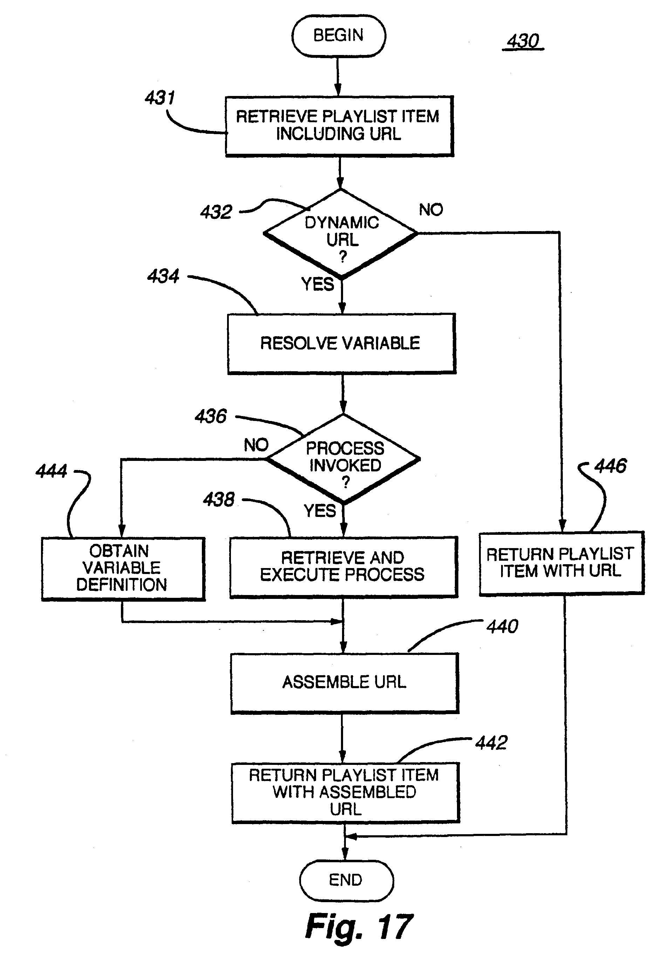

Figure 17 is a flow chart of a method 430 for processing dynamic URLs, URIs, or other network addresses. Method 430 may be implemented using software modules for execution by a corresponding machine. In method 430, the system retrieves a playlist item including a URL (step 431) and determines if the retrieved URL is a dynamic URL (step 432). It may determine if the URL is dynamic by parsing the URL to detect the presence of a variable in brackets or other distinguishing characters. If it is not a dynamic URL, the system returns the playlist item with no processing to the URL (step 446).

If it is a dynamic URL, the system resolves the variable in the URL (step 434). The system determines if the variable references or invokes a particular process (step 436). If a process is not involved, the system obtains a definition for the variable (step 444). If the variable does invoke a process, the system retrieves and executes the process in order to generate a definition for the variable (step 438). The system may resolve the variable based upon an identification of an intended recipient of the URL in order customize content for the user. For example, it may obtain user-profile information, and select a variable definition based upon the user-profile information, and/or it may use a geographic location of the user to resolve the variable. The user's location may be determined, for example, from the user-profile information. Using the variable definition, the system assembles a completed URL step (440) and returns the playlist item with the assembled URL in steps 410 and 416 of playlist method 400 (step 442).

As indicated above, user profile information may be collected from the activities of a user by way of a user machine and/or may comprise demographic information about the user. The user profile information may be stored local to the user, for example, by the user machine, and may be used to resolve the variable of the dynamic URL.

## Claims

1. A method for providing network communication between a machine and a server, the method comprising the steps of:
receiving a request for a network connection;
generating a reference to a local connection in response to the request;
detecting communication at the local connection; and
establishing a connection with the local connection in response to the detecting and for facilitating network communication with the machine.

2. A method as claimed in Claim 1, wherein the establishing step comprises providing a local web server function at the local connection.

3. A method as claimed in Claim 1 or Claim 2, wherein the establishing step comprises providing a socket for the communication.

4. A method as claimed in any preceding claim, further comprising downloading networked content from a network for use in establishing the connection.

5. A method as claimed in any preceding claim, wherein the receiving step comprises receiving networked content.

6. A method as claimed in any preceding claim, wherein the receiving step comprises receiving a request for a web page from a web browser.

7. A method as claimed in any preceding claim, wherein the receiving step comprises receiving the request from an applet.

8. A method as claimed in any preceding claim, wherein the generating step comprises providing an address of the local connection.

9. A method as claimed in any preceding claim, wherein the detecting comprises receiving information for use in opening a socket with the local connection.

10. A method as claimed in any preceding claim, further comprising detecting a disconnection from the local connection.

11. A method as claimed in any preceding claim, further comprising obtaining particular content for use in rendering a specific user interface for the network communication.

12. Apparatus for providing network communication between a machine and a server, comprising:
receiving means for receiving a request for a network connection;
generating means for generating a reference to a local connection in response to the request;
detecting means for detecting communication at the local connection; and connection means for establishing a connection with the local connection in response to the detecting and for facilitating network communication with the machine.

13. Apparatus as claimed in Claim 12, wherein the connection means is arranged to provide a local web server function at the local connection.

14. Apparatus as claimed in Claim 12 or Claim 13, wherein said connection means provides a socket for the communication.

15. Apparatus as claimed in any of Claims 12 to 14, further comprising means for downloading networked content from a network for use in establishing the connection.

16. Apparatus as claimed in any of Claims 12 to 15, wherein said receiving means is arranged to receive networked content.

17. Apparatus as claimed in any of Claims 12 to 16, wherein said receiving means is arranged to receive a request for a web page from a web browser.

18. Apparatus as claimed in any of Claims 12 to 17, wherein said receiving means is arranged to receive the request from an applet.

19. Apparatus as claimed in any of Claims 12 to 18, wherein said generating means comprises means for providing an address of the local connection.

20. Apparatus as claimed in any of Claims 12 to 19, wherein said detecting means comprises means for receiving information for use in opening a socket with the local connection.

21. Apparatus as claimed in any of Claims 12 to 20, further comprising means for detecting a disconnection from the local connection.

22. Apparatus as claimed in any of Claims 12 to 21, further comprising means for obtaining particular content for use in rendering a specific user interface for the network communication.

23. A method for distributing network addresses to user machines for use in obtaining content associated with the addresses, the method comprising the steps of:
receiving a plurality of network addresses identifying network locations of particular content;
receiving a time value of a time parameter associated with each of the network addresses; and
transmitting each of the network addresses to a user based upon each of the corresponding time values.

24. A method as claimed in Claim 23, further comprising receiving an associated description for each network address, and transmitting the associated description along with each network address

25. A method as claimed in Claim 24, wherein the step of receiving the associated description comprises receiving a textual description for each of the network addresses.

26. A method as claimed in any of Claims 23 to 25, wherein the step of receiving the network addresses comprises receiving a plurality of uniform resource locators.

27. A method as claimed in any of Claims 23 to 26, wherein the step of receiving the network addresses comprises receiving a plurality of uniform resource identifiers.

28. A method as claimed in any of Claims 23 to 27, wherein the step of receiving the time value comprises receiving a time-out value.

29. A method as claimed in any of Claims 23 to 28, further comprising the steps of receiving for each of the network addresses an indication of a frame or o layer in which to display corresponding descriptions on user machines.

30. A method as claimed in any of Claims 23 to 29, further comprising the step of receiving for each of the network addresses an indication of a type of a content identified by the network address.

31. A method as claimed in any of Claims 23 to 30, wherein the transmitting step comprises transmitting to user machines networked content corresponding to each of the network addresses.

32. A method as claimed in any of Claims 23 to 31, wherein descriptions are associated with each network address, and further comprising permitting a user to specify the network addresses, associated descriptions, and the time values.

33. A method as claimed in Claim 32, wherein the permitting step comprises 5 displaying a user interface for receiving from the user the network addresses, the associated descriptions, and the time values.

34. A method as claimed in any of Claims 23 to 33, further comprising receiving an associated description for each network address, and wherein:
the step of receiving the associated description comprises receiving an indication of the particular content; and
the transmitting step comprises transmitting the indication of the particular content to user machines for permitting users to select the indication in order to retrieve the particular content.

35. A method as claimed in any of Claims 23 to 34, further comprising receiving an associated description for each network address, and wherein:
the step of receiving the associated description comprises receiving a hypertext link; and
the transmitting step comprises transmitting the hypertext link to user machines.

36. A method as claimed in any of Claims 23 to 35, wherein the step of receiving the network addresses comprises receiving an identification of advertising content.

37. A method as claimed in any of Claims 23 to 36, wherein the step of receiving network addresses comprises receiving an identification of sports content, narrative content, and/or interactive game content.

38. Apparatus for distributing network addresses to user machines for use in obtaining content associated with the addresses, comprising:
receiving means for receiving a plurality of network addresses identifying network locations of particular content;
time receiving means for receiving a time value of a time parameter associated with each of the network addresses; and
transmission means for transmitting each of the network addresses to user machines based upon each of the corresponding time values.

39. Apparatus as claimed in Claim 38, wherein said receiving means is arranged to receive an associated description for each network address, and said transmission means is arranged to transmit the associated descriptions along with the network addresses.

40. Apparatus as claimed in Claim 39, wherein said receiving means is arranged to receive an indication of a frame or layer in which to display the corresponding descriptions on the user machines.

41. Apparatus as claimed in any of Claims 38 to 40, wherein said receiving means is arranged to receive a plurality of uniform resource locators.

42. Apparatus as claimed in any of Claims 38 to 41, wherein said receiving means is arranged to receive a plurality of uniform resource identifiers.

43. Apparatus as claimed in any of Claims 38 to 42, wherein said receiving means is arranged to receive a textual description for each of the network addresses.

44. Apparatus as claimed in any of Claims 38 to 43, wherein said time receiving means is arranged to receive a time-out value.

45. Apparatus as claimed in any of Claims 38 to 44, wherein said receiving means is arranged to receive an indication of a type of a content identified by the network address.

46. Apparatus as claimed in any of Claims 38 to 45, wherein said transmission means is arranged to transmit to the user machines networked content corresponding to each of the network addresses.

47. Apparatus as claimed in any of Claims 38 to 46, wherein descriptions are associated with each network address, and further comprising means for permitting a user to specify the network addresses, the associated descriptions, and the time values.

48. Apparatus as claimed in Claim 47, wherein said permitting means is arranged to display a user interface for receiving from the user the network addresses, the associated descriptions, and the time values.

49. Apparatus as claimed in any of Claims 38 to 48, wherein:
said receiving means is arranged to receive an indication of the particular content; and
said transmission means is arranged to transmit the indication of the particular content to user machines to enable users to retrieve the particular content by selecting the indication.

50. Apparatus as claimed in any of Claims 38 to 49, wherein:
said receiving means is arranged to receive a hypertext link; and
said transmission means is arranged to transmit the hypertext link to user machines.

51. Apparatus as claimed in any of Claims 38 to 50, wherein said receiving means is arranged to receive an identification of advertising content.

52. Apparatus as claimed in any of Claims 38 to 51, wherein said receiving means is arranged to receive an identification of sports content, narrative content, and/or interactive game content.

53. A method for distributing dynamic network addresses to user machines for use in obtaining content associated with the addresses, comprising the steps of:
receiving a network address containing a variable, the network address identifying varying network locations of particular content based upon the variable;
receiving an associated description for the network address;
resolving the variable in the network address based upon information related to a user machine intended to receive the network address; and
transmitting the network address along with the associated description to said user machine.

54. A method as claimed in Claim 53, further comprising the steps of receiving a time value of a time parameter associated with the network address, and transmitting the network address to the user machine based upon said time value.

55. A method as claimed in Claim 54, wherein the step of receiving the time value comprises receiving a time-out value.

56. A method as claimed in any of Claims 53 to 55, wherein the resolving step comprises executing a process associated with the variable.

57. A method as claimed in any of Claims 53 to 56, wherein the resolving step comprises obtaining information based upon the variable.

58. A method as claimed in any of Claims 53 to 57, wherein the resolving step comprises assembling the network address using the information.

59. A method as claimed in any of Claims 53 to 58, wherein the step of receiving the network address comprises receiving a uniform resource locator.

60. A method as claimed in any of Claims 53 to 59, wherein the step of receiving the network address comprises receiving a uniform resource identifier.

61. A method as claimed in any of Claims 53 to 60, wherein the step of receiving the description comprises receiving a textual description for the network address.

62. A method as claimed in any of Claims 53 to 61, further comprising receiving for the network address an indication of a frame or layer in which to display the corresponding description on the user machine.

63. A method as claimed in any of Claims 53 to 62, further comprising receiving for the network address an indication of a type of a content identified by the network address.

64. A method as claimed in any of Claims 53 to 63, wherein the transmitting step comprises transmitting to the user machine networked content corresponding to the network address.

65. A method as claimed in any of Claims 53 to 64, wherein the step of receiving the network address comprises receiving an identification of advertising content.

66. A method as claimed in any of Claims 53 to 65, wherein the step of receiving the network address comprises receiving an identification of sports content, narrative content, and/or interactive game content.

67. A method as claimed in any of Claims 53 to 66, wherein the resolving step comprises resolving the variable based upon user-profile information related to a user.

68. A method as claimed in Claim 67, wherein the resolving step comprises resolving the variable based upon demographic information related to the user.

69. A method as claimed in Claim 67 or Claim 68, wherein the resolving step comprises resolving the variable based upon activity-based information related to the user.

70. A method as claimed in any of Claims 67 to 69, wherein the resolving step comprises resolving the variable based upon at least one of the following: the age of a user, the sex of a user, the marital status of a user, prior activities of a user, the income range of a user, the number of people in a user's household, the occupation of a user, the industry of a user, the length of residence of a user, and/or the interests of a user.

71. A method as claimed in any of Claims 53 to 70, wherein the resolving step comprises resolving the variable based upon identification of a geographic location of a user.

72. Apparatus for distributing dynamic network addresses to user machines for use in obtaining content associated with the address, comprising:
receiving means for receiving a network address containing a variable, the network address identifying varying network locations of particular content based upon the variable, and for receiving an associated description for the network address;
resolution means module for resolving the variable in the network address based upon information related to a user machine intended to receive the network address; and
transmission means for transmitting the network address along with the associated description to said user machine.

73. Apparatus as claimed in Claim 72, further comprising time receiving means for receiving a time value of a time parameter associated with the network address, and wherein said transmission means is arranged to transmit the network address to said user machine based upon the corresponding time value.

74. Apparatus as claimed in Claim 73, wherein said time receiving means is arranged to receive a time-out value.

75. Apparatus as claimed in any of Claims 72 to 74, wherein the resolution means is arranged to execute a process associated with the variable.

76. Apparatus as claimed in any of Claims 72 to 75, wherein the resolution means is arranged to obtain information based upon the variable.

77. Apparatus as claimed in any of Claims 72 to 76, wherein the resolution means is arranged to assemble the network address using the information.

78. Apparatus as claimed in any of Claims 72 to 77, wherein said receiving means is arranged to receive a uniform resource locator.

79. Apparatus as claimed in any of Claims 72 to 78, wherein said receiving means is arranged to receive a uniform resource locator.

80. Apparatus as claimed in any of Claims 72 to 79, wherein said receiving means is arranged to receive a textual description for the network address.

81. Apparatus as claimed in any of Claims 72 to 80, wherein said receiving means is arranged to receive for a network address an indication of a frame or layer in which to display the corresponding description on the user machine.

82. Apparatus as claimed in any of Claims 72 to 81, wherein said receiving means is arranged to receive an indication of a type of a content identified by the network address.

83. Apparatus as claimed in any of Claims 72 to 82, wherein the transmission means is arranged to transmit to the user machine networked content corresponding to the network address.

84. Apparatus as claimed in any of Claims 72 to 83, wherein said receiving means is arranged to receive an indication of advertising content.

85. Apparatus as claimed in any of Claims 72 to 84, wherein said receiving means is arranged to receive an identification of sports content, narrative content, and/or interactive game content.

86. Apparatus as claimed in any of Claims 72 to 85, wherein the resolution means is arranged to resolve the variable based upon user-profile information related to a user.

87. Apparatus as claimed in Claim 86, wherein the resolution means is arranged to resolve the variable based upon demographic information related to the user.

88. Apparatus as claimed in Claim 86 or Claim 87, wherein the resolution means is arranged to resolve the variable based upon activity-based information related to the user.

89. Apparatus as claimed in any of Claims 86 to 88, wherein the resolution means is arranged to resolve the variable based upon at least one of the following: the age of a user, the sex of a user, the marital status of a user, the prior activities of a user, the income range of a user, the number of people in a user's household, the occupation of a user, the industry of a user, the length of residence of a user, and/or the interests of a user.

90. Apparatus as claimed in any of Claims 72 to 89, wherein the resolution means is arranged to resolve the variable based upon identification of a geographic location of the user.

91. A method of receiving information over a network, the information related to a program, comprising:
activating a computer program associated with a user machine, the computer program operating as local server to provide communication between the user machine and the network; and
receiving the information at the user machine from the network via the computer program.

92. A method of providing information related to a program over a network, comprising:
selecting information related to the program; and
transmitting the information from the network to a user machine, the user machine associated with a computer program, the computer operating as local server to provide communication between the user machine and the network.

93. A method of receiving information over a network, the information related to a television program, comprising:
activating a computer program associated with a user machine, the computer program operating as local server to provide communication between the user machine and the network; and
receiving the information at the user machine from the network via the computer program.

94. A method of providing information related to a television program over a network, comprising:
selecting information related to the television program; and
transmitting the information from the network to a user machine, the user machine associated with a computer program, the computer program operating as local server to provide communication between the user machine and the network.

95. A method as claimed in any of Claims 91 to 94, further comprising the step of reading data from a memory device coupled to the user machine.

96. A method as claimed in any of Claims 91 to 95, further comprising the step of writing data from a memory device coupled to the user machine.

97. A method as claimed in any of Claims 91 to 96, wherein the network is the Internet.

98. A method as claimed in Claim 97, wherein the information related to the program further comprises a uniform resource locator.

99. A method as claimed in any of Claims 91 to 98, wherein the program is provided from broadcast television, storage media such as VHS tape, Beta tape, CD-ROM, or DVD, Internet and/or a video server.

100. A method as claimed in any of Claims 91 to 99, further comprising the step of transmitting a response from the user machine via the computer program to the network.

101. A method as claimed in any of Claims 91 to 100, wherein the computer program is a plug-in in a web browser.

102. A method as claimed in Claim 101, wherein the plug-in instantiates gateway means for communication with the network.

103. A method as claimed in Claim 102, wherein, for communication purposes, the plug-in appears to the user machine and the network to be a web server.

104. A method of receiving information related to a television program over the Internet, comprising:
activating a computer program associated with a user machine, the computer program operating as local server to provide communication between the user machine and the network; and
receiving the information at the user machine from the network via the computer program, the information including a uniform resource locator from a playlist containing at least one uniform resource locator related to the television program.

105. A method of providing information related to a television program over a network, comprising:
selecting information including a uniform resource locator from a playlist containing at least one uniform resource locator related to the televsion program; and
transmitting the information from the network to a user machine, the user machine associated with a computer program, the computer program operating as local server to provide communication between the user machine and the network.

106. A method as claimed in Claim 104 or Claim 105, further comprising the step of reading data from a memory device coupled to the user machine.

107. A method as claimed in any of Claims 104 to 106, further comprising the step of writing data from a memory device coupled to the user machine.

108. A method as claimed in any of Claims 104 to 107, wherein the uniform resource locator is directed to a web site providing additional information related to the content of the television program.

109. A method as claimed in any of Claims 104 to 107, wherein the uniform resource locator is directed to a web site providing additional information related to advertising associated with the television program.

110. A method as claimed in any of Claims 104 to 109, wherein the television program is provided from broadcast television, storage media such as VHS tape, Beta tape, CD-ROM, or DVD, Internet and/or a video server.

111. A method as claimed in any of Claims 104 to 110, further comprising the step of transmitting a response from the user machine via the computer program to the network.

112. A method as claimed in any of Claims 104 to 111, wherein the computer program is a plug-in in a web browser.

113. A method as claimed in Claim 112, wherein the plug-in instantiates gateway means for communication with the network.

114. A method as claimed in Claim 112 or Claim 113, wherein, for communication purposes, the plug-in appears to the user machine and the network to be a web server.

115. A communications apparatus for providing network communications, comprising:
instantiating gateway means within the communications apparatus; and opening a connection to a network with the gateway means; and emulating a web server for communications with the network.

116. A communications apparatus as claimed in Claim 115, wherein the gateway means utilizes information transmitted over a network and received by a browser, the browser being supported by the communications apparatus.

117. A communications apparatus as claimed in Claim 115 or Claim 116, wherein the gateway means is instantiated in response to a command from an applet.

118. A method for connecting to a network server, comprising:
loading an htlm page on a user machine with a web browser in communication with the network server;
instantiating a plug-in module with the html page;
instantiating a gateway module with the plug-in module; and
opening a TCP/IP socket connection to the network server in response to a request from an applet; and
emulating a web server for communications a web server in the user machine.

119. A computer readable medium containing instructions for controlling a computer system in a user machine to implement a local host for communicating between the user machine and a network server, by:
instantiating a gateway module within the user machine; and
opening a connection to the network server with the gateway module; and emulating a web server for communications with the network server.

120. A computer readable medium containing instructions for controlling a computer system in a user machine to implement a local host for communicating between the user machine and a network server, by:
loading an htlm page on a user machine with a web browser in communication with the network server;
instantiating a plug-in module with the html page;
instantiating a gateway module with the plug-in module; and
opening a TCP/IP socket connection to the network server in response to a request from an applet.

121. An apparatus arranged to receive information over a network, the information related to a program, comprising:
a user machine; and
a computer program associated with the user machine, the computer program operating as local server to receive the information from the network and provide the information to the user machine.

122. An apparatus arranged to provide information related to a program over a network comprising:
an information selector, the information selector containing and transmitting information related to the program to a computer program associated with a user machine, the computer program operating as local server to receive the information from the network and provide the information to the user machine.

123. An apparatus capable of receiving information over a network, the information related to a television program, comprising:
a user machine; and
a computer program associated with the user machine, the computer program operating as local server to receive the information from the network and provide the information to the user machine.

124. An apparatus capable of providing information related to a television program over a network, comprising:
an information selector, the information selector containing and transmitting information related to the program to a computer program associated with a user machine, the computer program operating as a local server to receive the information from the network and provide the information to the user machine.

125. An apparatus for receiving information over a network, the information related to a program comprising:
means for activating a computer program associated with a user machine, the computer program operating as local server to provide communication between the user machine and the network; and
means for receiving the information at the user machine from the network via the computer program.

126. An apparatus for providing information related to a program over a network, comprising:
means for selecting information related to the program; and
means for transmitting the information from the network to a user machine, the user machine associated with a computer program, the computer program operating as local server to provide communication between the user machine and the network.

127. An apparatus for receiving information over a network, the information related to a television program, comprising:
means for activating a computer program associated with a user machine, the computer program operating as local server to provide communication between the user machine and the network; and
means for receiving the information at the user machine from the network via the computer program.

128. An apparatus for providing information related to a television program over a network, comprising:
means for selecting information related to the television program; and means for transmitting the information from the network to a user machine, the user machine associated with a computer program, the computer program operating as local server to provide communication between the user machine and the network.
